(19) Europäisches Patentamt / European Patent Office / Office européen des brevets

(11) **EP 4 470 701 A1**

(12) **EUROPEAN PATENT APPLICATION**
published in accordance with Art. 153(4) EPC

(43) Date of publication:
**04.12.2024  Bulletin 2024/49**

(21) Application number: **22923869.6**

(22) Date of filing: **28.01.2022**

(51) International Patent Classification (IPC):
**B23H 7/02** (2006.01)

(52) Cooperative Patent Classification (CPC):
**B23H 7/02**

(86) International application number:
**PCT/JP2022/003343**

(87) International publication number:
**WO 2023/145005 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventor: **CHU, Fuchen**
**Minamitsuru-gun, Yamanashi 401-0597 (JP)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **WIRE ELECTRICAL DISCHARGE MACHINE, CONTROL DEVICE, AND CONTROL METHOD**

(57)  A wire electrical discharge machine (10) comprises: an acquisition unit (44) that acquires a relative moving distance (L) defined for each of a plurality of blocks included in a machining program (40); a determination unit (48) that determines, on the basis of the plurality of relative moving distances (L) and a threshold value (TH), whether or not a machining route includes a minute part; and a machining condition changing unit (50) that changes, on the basis of the determination result, a machining condition (42) during machining of the minute part.

FIG. 3

## Description

TECHNICAL FIELD

The present invention relates to a wire electrical discharge machine, a control device that controls the wire electrical discharge machine, and a control method executed by the control device.

BACKGROUND ART

The wire electrical discharge machine moves a wire electrode relative to a workpiece along a machining path set in a machining program. The wire electrical discharge machine generates electrical discharge at an inter-electrode gap between the wire electrode and the workpiece in accordance with set machining conditions. Thus, the wire electrical discharge machine machines the workpiece (see also JP 2017-127918 A).

SUMMARY OF THE INVENTION

The machining conditions are generally set based on the material, thickness, and the like of the workpiece. In other words, the same machining conditions are used in the case of machining along a fine-shaped machining path and in the case of machining along a non-fine-shaped machining path.

However, in the case of machining along a fine-shaped machining path, if the same machining conditions as those for machining along a non-fine-shaped machining path are used, a problem occurs that the machining accuracy is deteriorated.

The present invention has the object of solving the aforementioned problem.

A first aspect of the present invention is characterized by a wire electrical discharge machine for machining a workpiece immersed in a working fluid by generating electrical discharge at an inter-electrode gap between a wire electrode and the workpiece in accordance with a set machining condition while relatively moving the wire electrode with respect to the workpiece along a machining path, the wire electrical discharge machine including: an acquisition unit configured to acquire a relative movement distance defined in each of a plurality of blocks included in a machining program; a determination unit configured to determine whether or not the machining path includes a fine-shaped portion based on a plurality of the relative movement distances that have been acquired and a threshold; and a machining condition changing unit configured to change the machining condition used during a period in which machining is performed along the fine-shaped portion, based on a determination result of the determination unit.

A second aspect of the present invention is characterized by a control device for controlling a wire electrical discharge machine that machines a workpiece immersed in a working fluid by generating electrical discharge at an inter-electrode gap between a wire electrode and the workpiece in accordance with a set machining condition while relatively moving the wire electrode with respect to the workpiece along a machining path, the control device including: an acquisition unit configured to acquire a relative movement distance defined in each of a plurality of blocks included in a machining program; a determination unit configured to determine whether or not the machining path includes a fine-shaped portion based on comparison of a plurality of the relative movement distances that have been acquired with a threshold; and a machining condition changing unit configured to change the machining condition used during a period in which machining is performed along the fine-shaped portion, based on a determination result of the determination unit.

A third aspect of the present invention is characterized by a control method for controlling a wire electrical discharge machine that machines a workpiece immersed in a working fluid by generating electrical discharge at an inter-electrode gap between a wire electrode and the workpiece in accordance with a set machining condition while relatively moving the wire electrode with respect to the workpiece along a machining path, the control method including: an acquisition step of acquiring a relative movement distance defined in each of a plurality of blocks included in a machining program; a determination step of determining whether or not the machining path includes a fine-shaped portion based on comparison of a plurality of the relative movement distances that have been acquired with a threshold; and a machining condition changing step of changing the machining condition used during a period in which machining is performed along the fine-shaped portion, based on a determination result in the determination step.

According to the aspects of the present invention, the machining conditions of the electric discharge machining are automatically changed according to the fineness of the machining path.

BRIEF DESCRIPTION OF DRAWINGS

FIG. 1 is a configuration diagram of a wire electrical discharge machine according to a first embodiment;

FIG. 2A is a diagram showing an example of a positional relationship among a long straight-line portion of a machining path, a wire electrode, and a nozzle, and FIG. 2B is a diagram showing an example of a positional relationship among a fine-shaped portion of the machining path, the wire electrode, and the nozzle;

FIG. 3 is a configuration diagram of a control device according to the first embodiment;

FIG. 4 is a diagram for explaining functions realized by the wire electrical discharge machine;

FIG. 5 is a flowchart illustrating a process flow of a control method according to the first embodiment;

FIG. 6 is a configuration diagram of a wire electrical discharge machine according to a second embodiment;

FIG. 7 is a block diagram of a control device according to the second embodiment;

FIG. 8 is a table showing a result of arranging a plurality of relative movement distances in ascending order; and

FIG. 9 is a flowchart illustrating a process flow of a control method according to the second embodiment.

## DETAILED DESCRIPTION OF THE INVENTION

[First Embodiment]

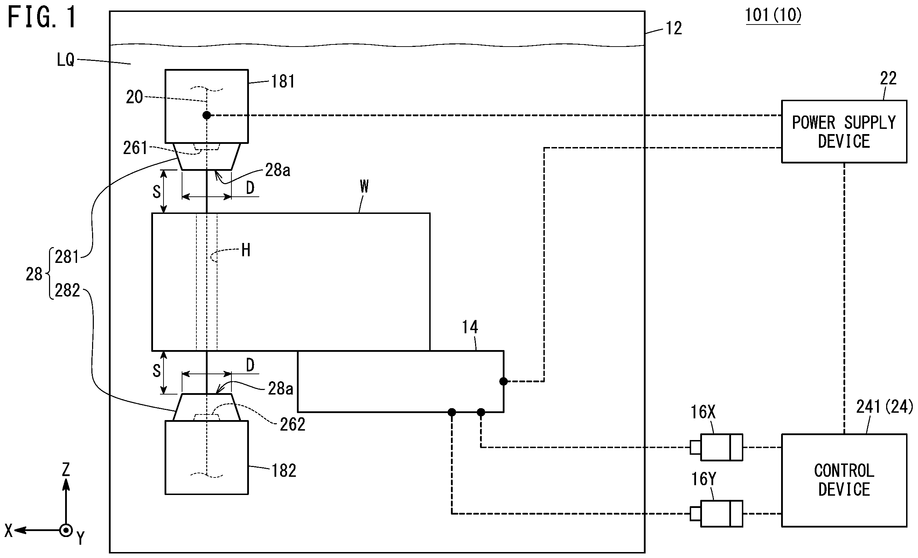

FIG. 1 is a configuration diagram of a wire electrical discharge machine 101 (10) according to a first embodiment.

FIG. 1 shows not only the wire electrical discharge machine 101 but also an X direction, a Y direction, and a Z direction. The X direction and the Y direction indicate directions parallel to a horizontal plane. The Z direction indicates an upward direction. The X direction, the Y direction, and the Z direction are orthogonal to each other.

The wire electrical discharge machine 101 includes a work pan 12, a table 14, a motor 16X, a motor 16Y, a first guide block 181, a second guide block 182, a wire electrode 20, a power supply device 22, and a control device 241 (24). The control device 241 is, for example, a numerical control device.

The work pan 12 is a tank that houses the first guide block 181, the second guide block 182, and the table 14. The work pan 12 stores a dielectric working fluid (working fluid) LQ.

The table 14 is a pedestal for supporting a workpiece W. The table 14 and the workpiece W are immersed in the dielectric working fluid LQ inside the work pan 12.

Each of the motor 16X and the motor 16Y is a motor connected to the table 14. The table 14 moves in the X direction in response to the driving of the motor 16X. The table 14 moves in the Y direction in response to the driving of the motor 16Y.

The motor 16X and the motor 16Y are controlled by the control device 241. That is, the horizontal movement of the table 14 is controlled by the control device 241.

The first guide block 181 is disposed above the table 14. The first guide block 181 includes a wire guide 261 and a nozzle 281 (28). The wire guide 261 supports the wire electrode 20 such that the position of the wire electrode 20 in the XY plane does not vary. The nozzle 281 is a member for jetting the dielectric working fluid LQ in the downward direction of the nozzle 281. A jetting port 28a for jetting the dielectric working fluid LQ is formed at the tip end portion of the nozzle 281. The wire guide 261 is positioned above the jetting port 28a. The tip end portion (jetting port 28a) of the nozzle 281 is spaced from the workpiece W by a predetermined distance S above the workpiece W.

The second guide block 182 is disposed below the table 14. The second guide block 182 includes a wire guide 262 and a nozzle 282 (28). The wire guide 262 supports the wire electrode 20 such that the position of the wire electrode 20 in the XY plane does not vary. The nozzle 282 jets the dielectric working fluid LQ in the upward direction of the nozzle 282. A jetting port 28a for jetting the dielectric working fluid LQ is formed at the tip end portion of the nozzle 282. The wire guide 262 is positioned below the jetting port 28a. The tip end portion of the nozzle 282 is spaced from the workpiece W by a predetermined distance S below the workpiece.

The amount of the working fluid LQ jetted from each of the nozzles 281 and 282 per unit time is controlled by the control device 241. One of the nozzle 281 and the nozzle 282 may be omitted.

Each of the first guide block 181 and the second guide block 182 may move in the horizontal direction. In order to move each of the first guide block 181 and the second guide block 182 horizontally, a plurality of motors 16 other than the motor 16X and the motor 16Y may be connected to each of the first guide block 181 and the second guide block 182.

The wire electrode 20 is a conductive wire material. A machining start hole H is formed in advance in the workpiece W. The machining start hole H penetrates the workpiece W in the up-down direction. The wire electrode 20 is passed through the machining start hole H.

The wire electrode 20 is fed from the wire guide 261 toward the wire guide 262 while being supported by the wire guide 261 and the wire guide 262. Methods for feeding the wire electrode 20 are well known in the art. Therefore, the description of the methods is omitted.

As described above, the workpiece W (table 14) moves horizontally in accordance with the driving of the motors 16X and 16Y. Thus, the wire electrode 20 moves relative to the workpiece W in the horizontal direction.

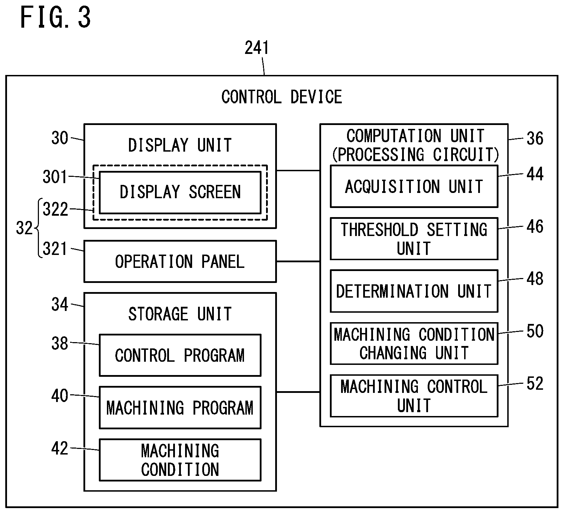

The operator creates in advance a machining program 40 describing a movement path (machining path) of the wire electrode 20 with respect to the workpiece W. The machining program 40 is input to the control device 241 (see FIG. 3 also). The control device 241 controls the motor 16X and the motor 16Y based on the machining program 40. Thus, the wire electrode 20 moves relatively along the machining path set in the machining program 40.

The power supply device 22 is connected to the wire electrode 20 and the table 14 (workpiece W). The power supply device 22 applies a pulse voltage to the inter-electrode gap between the workpiece W and the wire electrode 20. As a result, electrical discharge is generated at the inter-electrode gap. The power supply device 22 is controlled by the control device 241.

The workpiece W is subjected to cutting in response to the electrical discharge. Thus, the workpiece W is machined into a shape along the machining path by generating electrical discharge at the inter-electrode gap while moving the wire electrode 20 relatively along the machining path.

When the workpiece W is cut, chips are generated around the inter-electrode gap. The chips are removed from the periphery of the inter-electrode gap by the dielectric working fluid LQ jetted from each of the nozzles 281 and 282. The working fluid LQ jetted from each of the nozzles 281 and 282 cools the wire electrode 20. This prevents the wire electrode 20 from being excessively heated by the occurrence of the electrical discharge.

However, the wire electrode 20 deforms (vibrates, curves) in accordance with the electrical discharge generated at the inter-electrode gap and the flow of the dielectric working fluid LQ. The deformation of the wire electrode 20 causes change in the machining accuracy with which the wire electrode 20 machines the workpiece W.

The operator can set, as machining conditions 42, the pulse interval of the pulse voltage, the amount of the dielectric working fluid LQ jetted by the nozzle 28 per unit time, and the like, in the control device 241 (see also FIG. 3). The operator sets the machining conditions 42 based on, for example, the material, thickness, and the like of the workpiece W. The control device 241 controls the wire electrical discharge machine 101 based on the set machining conditions 42, thereby reducing the possibility that the machining accuracy may deteriorate due to the deformation of the wire electrode 20.

The flow of the dielectric working fluid LQ jetted from the nozzles 28 changes in accordance with the shape of the workpiece W in the vicinity of the inter-electrode gap. In a simple portion (for example, a long straight line) of the machining path, the flow of the dielectric working fluid LQ jetted from the nozzles 28 varies little. On the other hand, at a fine-shaped portion of the machining path, the flow of the working fluid LQ jetted from the nozzles 28 varies greatly. As a result, the working fluid LQ jetted from the nozzles 28 becomes turbulent at such a fine-shaped portion of the machining path.

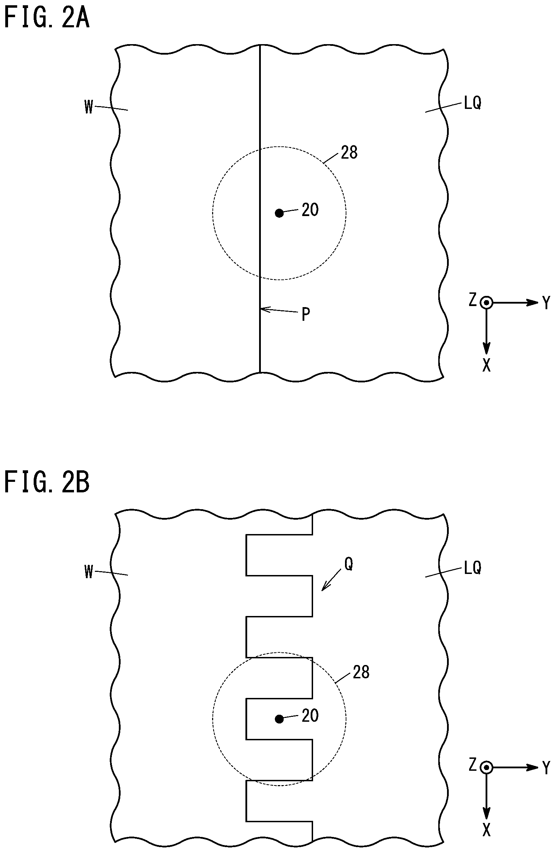

FIG. 2A is a diagram showing an example of a positional relationship among a long straight-line portion P of the machining path, the wire electrode 20, and the nozzle 28. FIG. 2B is a diagram showing an example of a positional relationship among a fine corrugated portion Q of the machining path, the wire electrode 20, and the nozzle 28.

Of the example of FIG. 2A and the example of FIG. 2B, the change in the flow of the dielectric working fluid LQ is greater in the example of FIG. 2B. Therefore, in the example of FIG. 2B, the flow of the dielectric working fluid LQ is turbulent.

The turbulent flow of the dielectric working fluid LQ causes the wire electrode 20 to vibrate largely. The large vibration of the wire electrode 20 affects the machining accuracy. Therefore, the turbulent flow of the dielectric working fluid LQ at a fine-shaped portion of the machining path affects the machining accuracy. For this reason, it is desirable to set the machining conditions 42 in consideration of not only the material and thickness of the workpiece W but also the fineness of the shape (machining path) of the workpiece W.

However, the task of determining whether the machining path is fine-shaped or not is a burden on the operator. Further, the criterion for determining whether the machining path is fine-shaped may differ for each operator. As a result, even when a plurality of workpieces W are machined based on the same machining program 40, the machining accuracy may vary depending on the operator in charge.

In light of the above, the control device 241 according to the present embodiment will be described in detail below. In the following description, the liquid amount refers to the amount of the dielectric working fluid LQ jetted from the nozzles 28 per unit time, unless otherwise specified.

FIG. 3 is a configuration diagram of the control device 241 according to the first embodiment.

The control device 241 is equipped with a display unit 30, an operation unit 32, a storage unit 34, and a computation unit 36.

The display unit 30 is a display device equipped with a display screen 301. The display unit 30 displays, for example, various data stored in the storage unit 34 described later on the display screen 301 as necessary. The material for the display screen 301 includes, for example, liquid crystal. However, the material for the display screen 301 is not limited to liquid crystal. For example, the material for the display screen 301 may include an OEL (Organic Electro-Luminescence) element.

The operation unit 32 is an input device that receives information input by an operator. The operator can input information (instructions) to the control device 241 via the operation unit 32. The operation unit 32 includes, for example, an operation panel 321 and a touch panel 322. The touch panel 322 is installed on the display screen 301. The operation unit 32 may include a keyboard, a mouse, and the like.

The storage unit 34 includes one or more memories. The storage unit 34 includes, for example, a RAM (random access memory), a ROM (read only memory), and the like.

The storage unit 34 stores a control program 38, a machining program 40, and machining conditions 42. The control program 38 is a program for controlling the wire electrical discharge machine 101 (10) based on the machining program 40 and the machining conditions 42.

The machining program 40 includes a command indicating a machining path. The command is composed of a plurality of blocks. The relative movement direction and the relative movement distance L of the wire electrode 20 are defined in each of the plurality of blocks.

The wire electrode 20 moves relatively along the machining path by sequentially executing the plurality of blocks.

As described above, the machining conditions 42 include conditions relating to the pulse interval of the pulse voltage and the amount of the dielectric working fluid LQ jetted by the nozzles 28. However, the machining conditions 42 is not limited to the conditions relating to the pulse interval and the liquid amount. The machining conditions 42 may include, for example, conditions relating to the offset amount between the wire electrode 20 and the machining path, the machining speed at which the workpiece W is machined, and the like.

The machining conditions 42 are input to the control device 241 by an operator via the operation unit 32, for example. The operator inputs the machining conditions 42 that are based on the material, thickness, and the like of the workpiece W, as usual. This operation is included in the setup operation of electrical discharge machining. However, the operator does not need to input the machining conditions 42 obtained by taking into account the fineness (of the shape) of the machining path.

The storage unit 34 may store various data, programs, and the like as necessary, in addition to the control program 38, the machining program 40, and the machining conditions 42.

The computation unit 36 includes a processing circuit. The processing circuit includes one or more processors. However, the processing circuit of the computation unit 36 may include an ASIC (application specific integrated circuit), a FPGA (field-programmable gate array), a discrete device, or the like.

The computation unit 36 includes an acquisition unit 44, a threshold setting unit 46, a determination unit 48, a machining condition changing unit 50, and a machining control unit 52. The acquisition unit 44, the threshold setting unit 46, the determination unit 48, the machining condition changing unit 50, and the machining control unit 52 are realized by the processor of the computation unit 36 executing the control program 38. However, at least part of the acquisition unit 44, the threshold setting unit 46, the determination unit 48, the machining condition changing unit 50, and the machining control unit 52 may be realized by the above-described ASIC, FPGA, discrete device, or the like.

The acquisition unit 44 acquires the relative movement distance L defined in each of the plurality of blocks included in the machining program 40, by analyzing the machining program 40.

The threshold setting unit 46 sets a threshold TH for determining whether or not the machining path includes a fine-shaped path. The threshold setting unit 46 calculates the threshold TH based on, for example, the following Equation (1). In Equation (1), TH denotes the threshold TH. D denotes the inner diameter of the nozzle 28 (jetting port 28a). S denotes the predetermined distance S described above. $\varphi$ denotes the wire diameter of the wire electrode 20. Each of $\alpha$, $\beta$, and $\gamma$ denotes a weighting coefficient. The values $\alpha$, $\beta$, and $\gamma$ are determined in advance based on experiments.

$$TH = \alpha \times D + \beta \times S + \gamma \times \varphi \cdots (1)$$

The operator may designate a threshold TH at the operator's discretion. In this case, the operator inputs the optional threshold TH to the control device 241 via the operation unit 32, for example. When the operator inputs the threshold TH, the threshold setting unit 46 sets the input threshold TH.

The determination unit 48 compares each of the plurality of relative movement distances L with the threshold TH. The determination unit 48 determines that a portion, of the machining path, corresponding to a block defining the relative movement distance L smaller than the threshold TH is a fine-shaped portion.

The determination unit 48 may sequentially compare each of the plurality of relative movement distances L with the threshold TH in accordance with the progress of the electrical discharge machining, or may compare the relative movement distance L of each of all the blocks with the threshold TH before the start of the electrical discharge machining.

When the machining path includes a fine-shaped portion, the machining condition changing unit 50 changes the machining conditions 42 used during a period in which machining is performed along the fine-shaped portion, such that the machining accuracy does not deteriorate.

For example, the machining condition changing unit 50 performs at least one of (1) a decrease in the liquid amount, (2) a decrease in the machining speed, (3) a change in the offset amount, or (4) a change in the pulse interval, for the machining conditions 42 during the period in which machining is performed along the fine-shaped portion. The offset amount is changed such that the wire electrode 20 is distanced from the workpiece W. The pulse interval is prolonged such that the frequency of electrical discharge at the inter-electrode gap is reduced. This reduces the possibility of deterioration in machining accuracy.

Note that, when the relative movement distance L is smaller than the threshold TH, the machining condition changing unit 50 preferably varies the amount of change in the machining condition 42 in accordance with the magnitude of the difference between the relative movement distance L and the threshold TH.

For example, the machining condition changing unit 50 preferably further decreases the liquid amount, further decreases the machining speed, further offsets the wire electrode 20 from the machining path, or further increases the pulse interval as the relative movement distance L further decreases below the threshold TH. Thus, the machining conditions are changed according to the fineness of the portion corresponding to each block of the machining path, and thus the machining accuracy is improved.

The machining control unit 52 controls the wire electrical discharge machine 101 based on the machining program 40 and the machining conditions 42. When the machining condition changing unit 50 changes the machining conditions 42, the machining control unit 52 controls the wire electrical discharge machine 101 based on the changed machining conditions 42.

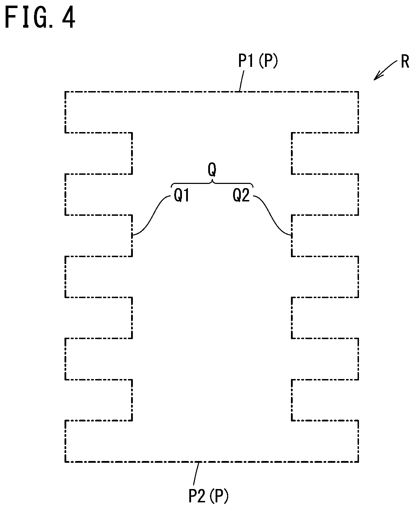

FIG. 4 is a diagram for explaining functions realized by the wire electrical discharge machine 101.

FIG. 4 illustrates a machining path R. The machining path R includes simple long straight-line portions P (P1, P2) and fine corrugated portions Q (Q1, Q2). The straight-line portions P are denoted by dash-dot lines, and the corrugated portions Q are denoted by dash-dot-dot lines.

The relative movement distance L of each of the straight-line portion P1 and the straight-line portion P2 is larger than the threshold TH. In this case, the wire electrical discharge machine 101 uses the machining conditions 42 obtained by taking into account the material, thickness, and the like of the workpiece W as in the conventional case during the period in which machining is performed on the straight-line portion P.

On the other hand, the relative movement distance L of each of the plurality of blocks corresponding to the corrugated portions Q1 is smaller than the threshold TH. In this case, the wire electrical discharge machine 101 uses the machining conditions 42, which are different from those for the straight-line portion P, during the period in which machining is performed on the corrugated portion Q.

In this way, the wire electrical discharge machine 101 can machine the workpiece W while changing the machining conditions 42 in accordance with the fineness of the machining path.

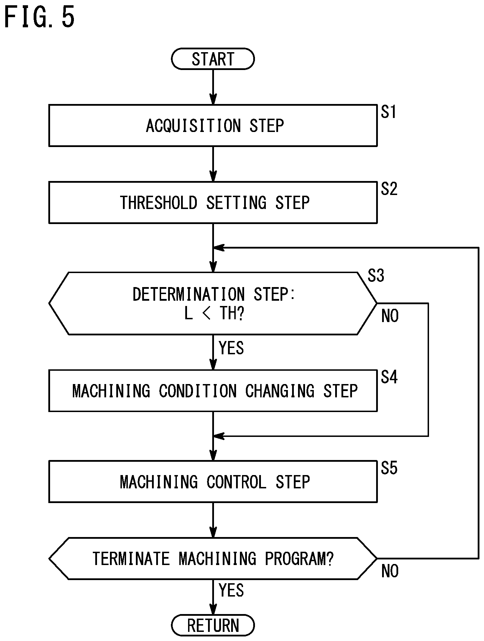

FIG. 5 is a flowchart illustrating a process flow of a control method according to the first embodiment.

The control device 241 executes, for example, a control method illustrated in FIG. 5. The control method includes an acquisition step S1, a threshold setting step S2, a determination step S3, a machining condition changing step S4, and a machining control step S5. The acquisition step S1 and the threshold setting step S2 may be performed in any order.

The acquisition step S1 is a step in which the acquisition unit 44 acquires a plurality of relative movement distances L. The acquisition unit 44 acquires the plurality of relative movement distances L by analyzing the machining program 40.

The threshold setting step S2 is a step in which the threshold setting unit 46 sets the threshold TH. Here, the threshold setting unit 46 calculates the threshold TH based on, for example, the above-described Equation (1).

The determination step S3 is a step in which the determination unit 48 compares the relative movement distances L with threshold TH. The determination unit 48 compares the relative movement distance L of the block to be executed next by the machining control unit 52 with the threshold TH. When the relative movement length L is smaller than the threshold TH ($L < TH$), the machining condition changing step S4 and the machining control step S5 are executed in this order. If the relative movement length L is equal to or greater than the threshold TH ($L \geq TH$), the machining condition changing step S4 is skipped and the machining control step S5 is executed.

The machining condition changing step S4 is a step in which the machining condition changing unit 50 changes the machining conditions 42. The machining condition changing unit 50 changes the machining conditions 42 in order to reduce the adverse effect on the machining accuracy, caused by the fineness of the machining path. For example, the machining condition changing unit 50 executes at least one of the above-described (1) to (4). Here, it is preferable that the machining condition changing unit 50 increases the amount of change in the machining conditions 42 as the difference between the relative movement distance L and the threshold TH increases.

The machining control step S5 is a step in which the machining control unit 52 controls the wire electrical discharge machine 101 to perform electrical discharge machining on the workpiece W. The machining control unit 52 controls the wire electrical discharge machine 101 based on the machining program 40 and the machining conditions 42.

The machining control step S5 of the present embodiment is temporarily terminated every time the processing of one block is completed. If the machining program 40 has not yet been completed, the control device 241 executes the process flow from the determination step S3 to the machining control step S5 again. In the determination step S3, which is executed again, the relative movement length L of the block next to the block executed last is compared with the threshold TH.

According to the present embodiment, the machining condition 42 is changed in consideration of the fineness of the machining path. Therefore, the possibility of deterioration in machining accuracy caused by the machining path being fine-shaped is reduced.

The fineness of the machining path is quantitatively evaluated based on a comparison between each of the plurality of relative movement distances L included in the machining program 40 and the threshold TH set by the threshold setting unit 46. Therefore, the wire electrical discharge machine 101 can perform electrical discharge machining with a constant machining accuracy, regardless of the difference in the operator in charge.

[Second Embodiment]

A second embodiment will be described below. However, explanations that overlap with those of the first embodiment will be omitted insofar as possible in the following description. The same reference numerals as those in the first embodiment are given to the components described in the first embodiment unless otherwise specified.

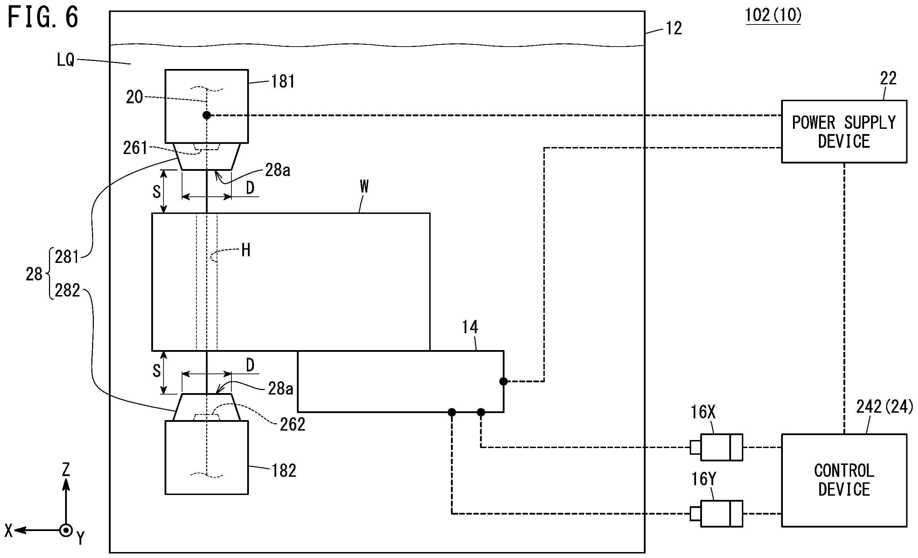

FIG. 6 is a configuration diagram of a wire electrical discharge machine 102 (10) according to the second embodiment.

The wire electrical discharge machine 102 includes the work pan 12, the table 14, the motor 16X, the motor 16Y, the first guide block 181, the second guide block 182, the wire electrode 20, the power supply device 22, and a control device 242 (24).

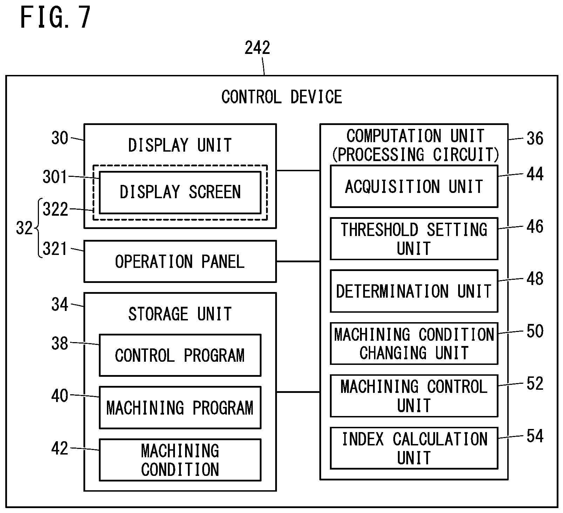

FIG. 7 is a configuration diagram of the control device 242 according to the second embodiment.

The control device 242 is, for example, a numerical control device. The control device 242 is equipped with the display unit 30, the operation unit 32, the storage unit 34, and the computation unit 36.

The computation unit 36 includes the acquisition unit 44, the threshold setting unit 46, the determination unit 48, the machining condition changing unit 50, and the machining control unit 52. The computation unit 36 further includes an index calculation unit 54. The index calculation unit 54 is implemented by, for example, the processor of the computation unit 36 executing the control program 38, similarly to the acquisition unit 44 and the like.

The index calculation unit 54 calculates an index IDX indicating the fineness (of the shape) of the machining path based on the plurality of relative movement distances L acquired by the acquisition unit 44.

The index IDX is, for example, a median of the relative movement distances L indicated by the blocks included in the machining program 40. The median of the plurality of relative movement distances L tends to decrease as the shape of the machining path becomes finer.

The index calculation unit 54 acquires the relative movement distances L defined respectively in the plurality of blocks in order to obtain the median of the plurality of relative movement distances L. Next, the index calculation unit 54 arranges (sorts) the plurality of acquired relative movement distances L in ascending order or descending order.

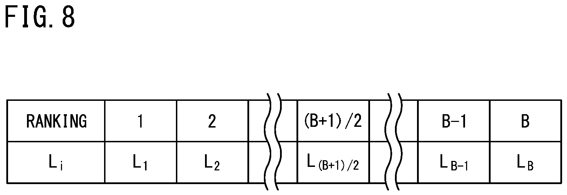

FIG. 8 is a table showing the results of arranging the plurality of relative movement distances L in ascending order. In FIG. 8, the upper row (rank) indicates the ranking of each block. B indicates the total number of blocks. The lower row (Li) shows the relative movement distance L defined by each block ($1 \leq i \leq B$). $L_k$ is equal to or larger than $L_{k-1}$ ($L_{k-1} \leq L_k$, $2 \leq k \leq i$). The median of the plurality of relative movement distances L is $L_{(B+1)/2}$ in the table of FIG. 8.

The threshold setting unit 46 sets a threshold TH. The description of the threshold setting unit 46 is omitted (see the first embodiment).

The determination unit 48 compares the index IDX calculated by the index calculation unit 54 with the threshold TH. When the index IDX is smaller than the threshold TH, the determination unit 48 determines that the machining path includes a fine-shaped portion.

When the machining path includes a fine-shaped portion, the machining condition changing unit 50 changes the machining conditions 42 during the execution of the electrical discharge machining such that the machining accuracy does not deteriorate. For example, the machining condition changing unit 50 performs at least one of (1) a decrease in the liquid amount, (2) a decrease in the machining speed, (3) a change in the offset amount, or (4) a change in the pulse interval (see also the first embodiment).

Note that, when the index IDX is smaller than the threshold TH, the machining condition changing unit 50 preferably varies the amount of change in the machining condition 42 in accordance with the magnitude of the difference between the index IDX and the threshold TH. For example, it is preferable that the machining condition changing unit 50 further decreases the liquid amount, further lowers the machining speed, further offsets the wire electrode 20 from the machining path, or further prolongs the pulse interval as the index IDX becomes smaller than the threshold TH. Thus, the machining conditions are changed according to the fineness of the machining path, and thus the machining accuracy is improved.

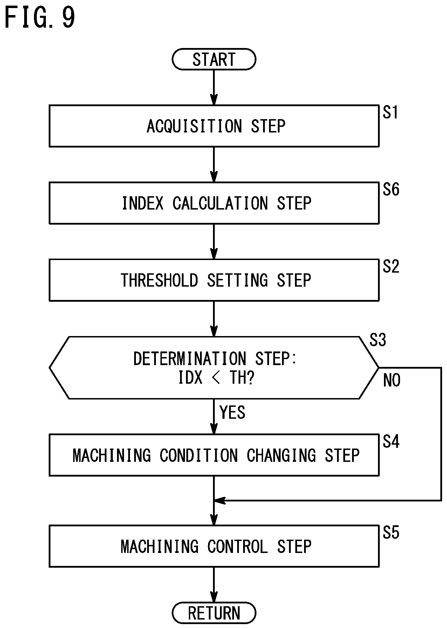

FIG. 9 is a flowchart illustrating a process flow of a control method according to the second embodiment.

The control device 242 executes, for example, the control method illustrated in FIG. 9. The control method includes the acquisition step S1, the threshold setting step S2, the determination step S3, the machining condition changing step S4, and the machining control step S5. The control method further includes an index calculation step S6.

The index calculation step S6 is executed between the acquisition step S1 and the determination step S3. The index calculation step S6 is a step in which the index calculation unit 54 calculates the index IDX. The index calculation unit 54 calculates the index IDX based on the plurality of relative movement distances L acquired in the acquisition step S1.

In the determination step S3, the determination unit 48 compares the index IDX with the threshold TH. Based on the comparison result, the determination unit 48 determines whether the machining path includes a fine-shaped portion.

In the case of the present embodiment, the index IDX based on the plurality of relative movement distances L is compared with the threshold TH. Therefore, according to the present embodiment, the number of comparisons performed by the determination unit 48 is smaller than that in a case where each of the plurality of relative movement distances L is compared with the threshold TH.

When the index IDX is smaller than the threshold TH (IDX < TH), the machining condition changing step S4 and the machining control step S5 are executed in this order. If the index IDX is equal to or larger than the threshold TH (IDX ≥ TH), the machining control step S5 is executed.

In the machining condition changing step S4, when the machining path includes a fine-shaped portion, the machining condition 42 is changed such that the machining accuracy does not deteriorate (see also the first embodiment).

According to the present embodiment, the machining condition 42 is changed in consideration of the fineness of the machining path, as in the first embodiment. Therefore, the possibility of deterioration in machining accuracy caused by the machining path being fine-shaped is reduced.

The fineness of the machining path is quantitatively evaluated based on a comparison between the index IDX calculated by the index calculation unit 54 through a predetermined calculation and the threshold TH set by the threshold setting unit 46. Therefore, the wire electrical discharge machine 102 can perform electrical discharge machining with a constant machining accuracy, regardless of the difference in the operator in charge.

[Modifications]

Modifications of the above-described embodiments will be described below. However, explanations that overlap with those of the above embodiments will be omitted insofar as possible in the following description. The same reference numerals as those in the above embodiments are given to the components described in the above embodiments unless otherwise specified.

(Modification 1)

There are cases in which the vertical (up-down) distance between the nozzle 281 and the workpiece W may be different from the vertical distance between the nozzle 282 and the workpiece W. In these cases, the threshold setting unit 46 may substitute, as the predetermined distance S, the average value of the vertical distance between the nozzle 281 and the workpiece W and the vertical distance between the nozzle 282 and the workpiece W into Equation (1).

(Modification 2)

When the relative movement distance L is smaller than the threshold TH, the machining condition changing unit 50 according to the first embodiment may change the machining condition 42 to a setting determined in advance for a fine-shaped machining path, regardless of the difference between the relative movement distance L and the threshold TH.

Similarly, when the index IDX is smaller than the threshold TH, the machining condition changing unit 50 according to the second embodiment may change the machining condition 42 to a setting determined in advance for a fine-shaped machining path, regardless of the difference between the index IDX and the threshold TH.

For example, a first machining condition 42 for machining a simple-shaped portion and a second machining condition 42 for machining a fine-shaped portion are stored in the storage unit 34 in advance. When the index IDX is smaller than the threshold TH, the machining condition changing unit 50 selects the second machining condition 42. On the other hand, when the index IDX is higher than the threshold TH, the machining condition changing unit 50 selects the first machining condition 42.

(Modification 3)

The index calculation unit 54 may calculate the index IDX after the electric discharge machining has been started. For example, each time one block of the plurality of blocks is executed, the index calculation unit 54 may calculate the index IDX based on the relative movement distances L defined respectively in a predetermined number of blocks subsequent to the one block that is being executed. The predetermined number is smaller than the total number of blocks included in the machining program. The operator may optionally input and set a specific value for the predetermined number to the control device 242 via the operation unit 32.

The machining condition changing unit 50 changes the machining conditions 42 used during the period in which the next block is executed, based on the result of comparison between the calculated index IDX and the threshold TH. This improves the machining accuracy.

(Modification 4)

The index calculation unit 54 may calculate the sum, the arithmetic mean, or the weighted mean of the plurality of relative movement distances L indicated by the plurality of blocks, as the index IDX. The sum, the arithmetic mean, and the weighted mean of the plurality of relative movement distances L tend to be smaller as the shape of the machining path is finer, similarly to the median of the plurality of relative movement distances L.

The arithmetic mean is derived by dividing the sum of the plurality of relative movement distances L by the number of blocks.

For obtaining the weighted mean, a weighting coefficient by which each relative movement distance L is multiplied is required. The plurality of weighting coefficients corresponding respectively to the plurality of relative movement distances L are stored in advance in the storage unit 34, for example. Concerning each of the plurality of weighting coefficients, the shorter the relative movement distance L, the larger the weighting coefficient corresponding to that relative movement distance L. The specific values of the plurality of weighting coefficients are determined based on experiments performed in advance.

The index calculation unit 54 may calculate the index IDX based on the following Equation (2). In Equation (2), IDX denotes the index IDX. B denotes the number of blocks. $L_1, L_2, ... , L_B$ denote the relative movement distances L of the blocks, respectively. $W_1, W_2, ... , W_B$ denote respectively the weighting coefficients corresponding to the respective blocks. As in the case of obtaining the weighted mean, concerning each of the plurality of weighting coefficients, the shorter the relative movement distance L, the larger the weighting coefficient corresponding to that relative movement distance L.

$$\text{IDX} = \frac{\sum_{i=1}^{B}(W_i \times L_i)}{B} \cdots (2)$$

Note that, if

$$B = W_1 + W_2 + ... + W_B, \text{ Equation (2)}$$

represents an equation for calculating the weighted mean of the plurality of relative movement distances L, as the index IDX.

(Combination of Plurality of Modifications)

The plurality of modifications described above may be appropriately combined together within a range in which no technical inconsistencies occur.

[Inventions Capable of Being Obtained from Embodiments]

The invention that can be grasped from the above-described embodiments and modifications will be described below.

<First Aspect of Invention>

A first aspect of the present invention is characterized by the wire electrical discharge machine (10) for machining the workpiece (W) immersed in the working fluid (LQ) by generating electrical discharge at the inter-electrode gap between the wire electrode (20) and the workpiece in accordance with the set machining condition (42) while relatively moving the wire electrode with respect to the workpiece along the machining path, the wire electrical discharge machine including: the acquisition unit (44) configured to acquire the relative movement distance (L) defined in each of the plurality of blocks included in the machining program (40); the determination unit (48) configured to determine whether or not the machining path includes the fine-shaped portion based on the plurality of relative movement distances that have been acquired and the threshold (TH); and the machining condition changing unit (50) configured to change the machining condition used during a period in which machining is performed along the fine-shaped portion, based on the determination result of the determination unit.

With this configuration, the machining conditions of the electric discharge machining are automatically changed according to the fineness of the machining path.

The first aspect of the present invention may further include: the nozzle (28) configured to jet the working fluid while relatively moving with respect to the workpiece; and the threshold setting unit (46) configured to set the threshold based on the inner diameter (D) of the nozzle, the distance (S) between the nozzle and the workpiece, and the wire

diameter ($\varphi$) of the wire electrode. With this configuration, the fineness of the machining path can be quantitatively evaluated.

The determination unit may determine that a portion, of the machining path, corresponding to the block that defines the relative movement distance smaller than the threshold is the fine-shaped portion. With this configuration, it is possible to determine whether the machining path includes a fine-shaped portion, for each of the blocks.

The machining condition changing unit may vary the amount of change in the machining condition in accordance with the magnitude of the difference between the relative movement distance and the threshold. With this configuration, the machining conditions are appropriately changed according to the fineness of the portion corresponding to each of the blocks, and thus the machining accuracy is improved.

The first aspect of the present invention may further include: the index calculation unit (54) configured to calculate the index indicating fineness of the machining path based on the plurality of relative movement distances, and when the index is smaller than the threshold, the determination unit may determine that portions corresponding to the plurality of blocks that define the plurality of relative movement distances are each the fine-shaped portion. This makes it possible to reduce the number of times of determination performed by the determination unit.

Each time one block of the plurality of blocks is executed, the index calculation unit may calculate the index based on the relative movement distances defined respectively in the predetermined number of blocks, among the blocks, subsequent to the one block that is being executed. Thus, the wire electrical discharge machine can determine whether or not to change the machining conditions used during the execution of each block, in parallel with the execution of electrical discharge machining.

The index may be a median, a weighted mean, or an arithmetic mean, of the plurality of relative movement distances. Thus, the wire electrical discharge machine can use, as the index, a numerical value that decreases as the shape of the machining path becomes finer.

The machining condition changing unit may vary the amount of change in the machining condition in accordance with the magnitude of the difference between the index and the threshold. Thus, the machining condition is appropriately changed according to the fineness (of the shape) of the portions corresponding to the plurality of blocks, and thus the machining accuracy is improved.

The machining condition may include the liquid amount of the working fluid, and the machining condition changing unit may decrease the liquid amount at which machining is performed along the fine-shaped portion. This reduces the possibility of deterioration in machining accuracy occurring when the machining path is fine-shaped.

The machining condition may include the pulse interval of the pulse voltage applied to the inter-electrode gap, and the machining condition changing unit may prolong the pulse interval at which machining is performed along the fine-shaped portion. This reduces the possibility of deterioration in machining accuracy occurring when the machining path is fine-shaped.

The machining condition may include the machining speed at which the workpiece is machined, and the machining condition changing unit may decrease the machining speed at which machining is performed along the fine-shaped portion. This reduces the possibility of deterioration in machining accuracy occurring when the machining path is fine-shaped.

The machining condition may include the offset amount of the wire electrode with respect to the machining path, and the machining condition changing unit may change the offset amount at which machining is performed along the fine-shaped portion, in a manner so that the wire electrode is distanced from the workpiece. This reduces the possibility of deterioration in machining accuracy occurring when the machining path is fine-shaped.

<Second Aspect of Invention>

A second aspect of the present invention is characterized by the control device (24) for controlling the wire electrical discharge machine (10) that machines the workpiece (W) immersed in the working fluid (LQ) by generating electrical discharge at the inter-electrode gap between the wire electrode (20) and the workpiece in accordance with the set machining condition (42) while relatively moving the wire electrode with respect to the workpiece along the machining path, the control device (24) including: the acquisition unit (44) configured to acquire the relative movement distance defined in each of the plurality of blocks included in the machining program (40); the determination unit (48) configured to determine whether or not the machining path includes the fine-shaped portion based on comparison of the plurality of the relative movement distances that have been acquired with the threshold (TH); and the machining condition changing unit (50) configured to change the machining condition used during a period in which machining is performed along the fine-shaped portion, based on the determination result of the determination unit.

With this configuration, the machining conditions of the electric discharge machining are automatically changed according to the fineness of the machining path.

<Third Aspect of Invention>

A third aspect of the present invention is characterized by the control method for controlling the wire electrical discharge machine (10) that machines the workpiece (W) immersed in the working fluid (LQ) by generating electrical discharge at the inter-electrode gap between the wire electrode (20) and the workpiece in accordance with the set machining condition (42) while relatively moving the wire electrode with respect to the workpiece along the machining path, the control method including: the acquisition step (S1) of acquiring the relative movement distance (L) defined in each of the plurality of blocks included in the machining program (40); the determination step (S3) of determining whether or not the machining path includes the fine-shaped portion based on comparison of the plurality of relative movement distances that have been acquired with the threshold (TH); and the machining condition changing step (S4) of changing the machining condition used during a period in which machining is performed along the fine-shaped portion, based on the determination result in the determination step.

With this configuration, the machining conditions of the electric discharge machining are automatically changed according to the fineness of the machining path.

Reference Signs List

10: wire electrical discharge machine
20: wire electrode
24: control device
28: nozzle
40: machining program
42: machining condition
44: acquisition unit
46: threshold setting unit
48: determination unit
50: machining condition changing unit
54: index calculation unit
D: inner diameter of nozzle
IDX: index
LQ: working fluid
S: distance between nozzle and workpiece
TH: threshold
W: workpiece
$\varphi$: wire diameter

**Claims**

1.  A wire electrical discharge machine (10) for machining a workpiece (W) immersed in a working fluid (LQ) by generating electrical discharge at an inter-electrode gap between a wire electrode (20) and the workpiece in accordance with a set machining condition (42) while relatively moving the wire electrode with respect to the workpiece along a machining path, the wire electrical discharge machine comprising:

    an acquisition unit (44) configured to acquire a relative movement distance (L) defined in each of a plurality of blocks included in a machining program (40);
    a determination unit (48) configured to determine whether or not the machining path includes a fine-shaped portion based on a plurality of the relative movement distances that have been acquired and a threshold (TH); and
    a machining condition changing unit (50) configured to change the machining condition used during a period in which machining is performed along the fine-shaped portion, based on a determination result of the determination unit.

2.  The wire electrical discharge machine according to claim 1, further comprising:

    a nozzle (28) configured to jet the working fluid while relatively moving with respect to the workpiece; and
    a threshold setting unit (46) configured to set the threshold based on an inner diameter (D) of the nozzle, a distance (S) between the nozzle and the workpiece, and a wire diameter ($\varphi$) of the wire electrode.

3. The wire electrical discharge machine according to claim 1 or 2, wherein
   the determination unit determines that a portion, of the machining path, corresponding to the block that defines the relative movement distance smaller than the threshold is the fine-shaped portion.

4. The wire electrical discharge machine according to claim 3, wherein
   the machining condition changing unit varies an amount of change in the machining condition in accordance with a magnitude of a difference between the relative movement distance and the threshold.

5. The wire electrical discharge machine according to claim 1 or 2, further comprising:

   an index calculation unit (54) configured to calculate an index indicating fineness of the machining path based on the plurality of relative movement distances,
   wherein, when the index is smaller than the threshold, the determination unit determines that portions corresponding to the plurality of blocks that define the plurality of relative movement distances are each the fine-shaped portion.

6. The wire electrical discharge machine according to claim 5, wherein
   each time one block of the plurality of blocks is executed, the index calculation unit calculates the index based on the relative movement distances defined respectively in a predetermined number of blocks, among the blocks, subsequent to the one block that is being executed.

7. The wire electrical discharge machine according to claim 5 or 6, wherein
   the index is a median, a weighted mean, or an arithmetic mean, of the plurality of relative movement distances.

8. The wire electrical discharge machine according to any one of claims 5 to 7, wherein
   the machining condition changing unit varies an amount of change in the machining condition in accordance with a magnitude of a difference between the index and the threshold.

9. The wire electrical discharge machine according to any one of claims 1 to 8, wherein

   the machining condition includes a liquid amount of the working fluid, and
   the machining condition changing unit decreases the liquid amount at which machining is performed along the fine-shaped portion.

10. The wire electrical discharge machine according to any one of claims 1 to 9, wherein

    the machining condition includes a pulse interval of a pulse voltage applied to the inter-electrode gap, and
    the machining condition changing unit prolongs the pulse interval at which machining is performed along the fine-shaped portion.

11. The wire electrical discharge machine according to any one of claims 1 to 10, wherein

    the machining condition includes a machining speed at which the workpiece is machined, and
    the machining condition changing unit decreases the machining speed at which machining is performed along the fine-shaped portion.

12. The wire electrical discharge machine according to any one of claims 1 to 11, wherein

    the machining condition includes an offset amount of the wire electrode with respect to the machining path, and
    the machining condition changing unit changes the offset amount at which machining is performed along the fine-shaped portion, in a manner so that the wire electrode is distanced from the workpiece.

13. A control device (24) for controlling a wire electrical discharge machine (10) that machines a workpiece (W) immersed in a working fluid (LQ) by generating electrical discharge at an inter-electrode gap between a wire electrode (20) and the workpiece in accordance with a set machining condition (42) while relatively moving the wire electrode with respect to the workpiece along a machining path, the control device comprising:

an acquisition unit (44) configured to acquire a relative movement distance (L) defined in each of a plurality of blocks included in a machining program (40);

a determination unit (48) configured to determine whether or not the machining path includes a fine-shaped portion based on comparison of a plurality of the relative movement distances that have been acquired with a threshold (TH); and

a machining condition changing unit (50) configured to change the machining condition used during a period in which machining is performed along the fine-shaped portion, based on a determination result of the determination unit.

14. A control method for controlling a wire electrical discharge machine (10) that machines a workpiece (W) immersed in a working fluid (LQ) by generating electrical discharge at an inter-electrode gap between a wire electrode (20) and the workpiece in accordance with a set machining condition (42) while relatively moving the wire electrode with respect to the workpiece along a machining path, the control method comprising:

an acquisition step (S1) of acquiring a relative movement distance (L) defined in each of a plurality of blocks included in a machining program (40);

a determination step (S3) of determining whether or not the machining path includes a fine-shaped portion based on comparison of a plurality of the relative movement distances that have been acquired with a threshold (TH); and

a machining condition changing step (S4) of changing the machining condition used during a period in which machining is performed along the fine-shaped portion, based on a determination result in the determination step.

FIG. 1

FIG. 2A

FIG. 2B

FIG. 3

241

CONTROL DEVICE

30 — DISPLAY UNIT

301 — DISPLAY SCREEN

322

32 {

321 — OPERATION PANEL

34 — STORAGE UNIT

38 — CONTROL PROGRAM

40 — MACHINING PROGRAM

42 — MACHINING CONDITION

COMPUTATION UNIT (PROCESSING CIRCUIT) — 36

ACQUISITION UNIT — 44

THRESHOLD SETTING UNIT — 46

DETERMINATION UNIT — 48

MACHINING CONDITION CHANGING UNIT — 50

MACHINING CONTROL UNIT — 52

FIG. 4

# FIG. 5

START

ACQUISITION STEP — S1

THRESHOLD SETTING STEP — S2

DETERMINATION STEP:
L < TH? — S3

NO

YES

MACHINING CONDITION CHANGING STEP — S4

MACHINING CONTROL STEP — S5

TERMINATE MACHINING PROGRAM?

NO

YES

RETURN

EP 4 470 701 A1

FIG. 6

102(10)

# FIG. 7

242

**CONTROL DEVICE**

30 — DISPLAY UNIT

301 — DISPLAY SCREEN
322
32
321 — OPERATION PANEL

34 — STORAGE UNIT

38 — CONTROL PROGRAM

40 — MACHINING PROGRAM

42 — MACHINING CONDITION

COMPUTATION UNIT (PROCESSING CIRCUIT) — 36

ACQUISITION UNIT — 44

THRESHOLD SETTING UNIT — 46

DETERMINATION UNIT — 48

MACHINING CONDITION CHANGING UNIT — 50

MACHINING CONTROL UNIT — 52

INDEX CALCULATION UNIT — 54

FIG. 8

| RANKING | 1 | 2 | | $(B+1)/2$ | | $B-1$ | $B$ |
|---------|-----|-----|---|-----------|---|---------|-------|
| $L_i$ | $L_1$ | $L_2$ | | $L_{(B+1)/2}$ | | $L_{B-1}$ | $L_B$ |

FIG. 9

```
                    ( START )
                        │
                        ▼
        ┌───────────────────────────────┐  S1
        │       ACQUISITION STEP         │
        └───────────────────────────────┘
                        │
                        ▼
        ┌───────────────────────────────┐  S6
        │     INDEX CALCULATION STEP     │
        └───────────────────────────────┘
                        │
                        ▼
        ┌───────────────────────────────┐  S2
        │     THRESHOLD SETTING STEP     │
        └───────────────────────────────┘
                        │
                        ▼
        ╱───────────────────────────────╲  S3
       ╱      DETERMINATION STEP:         ╲
       ╲         IDX < TH?                ╱ ── NO ──┐
        ╲───────────────────────────────╱          │
                        │ YES                       │
                        ▼                           │
        ┌───────────────────────────────┐  S4       │
        │  MACHINING CONDITION CHANGING STEP │       │
        └───────────────────────────────┘          │
                        │◄─────────────────────────┘
                        ▼
        ┌───────────────────────────────┐  S5
        │      MACHINING CONTROL STEP    │
        └───────────────────────────────┘
                        │
                        ▼
                    ( RETURN )
```

## INTERNATIONAL SEARCH REPORT

| International application No. |
| --- |
| **PCT/JP2022/003343** |

| A. | CLASSIFICATION OF SUBJECT MATTER |
| --- | --- |

***B23H 7/02***(2006.01)i
FI:  B23H7/02 R

According to International Patent Classification (IPC) or to both national classification and IPC

| B. | FIELDS SEARCHED |
| --- | --- |

Minimum documentation searched (classification system followed by classification symbols)

B23H1/00-11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-188524 A (FANUC LTD.) 31 October 2019 (2019-10-31)<br>entire text, all drawings | 1-14 |
| A | JP 2019-962 A (FANUC LTD.) 10 January 2019 (2019-01-10)<br>entire text, all drawings | 1-14 |
| A | JP 2010-240761 A (SODICK CO., LTD.) 28 October 2010 (2010-10-28)<br>entire text, all drawings | 1-14 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **11 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/003343**

| Patent document cited in search report | | | Publication date (day/month/year) | Patent family member(s) | | | Publication date (day/month/year) |
|---|---|---|---|---|---|---|---|
| JP | 2019-188524 | A | 31 October 2019 | US entire text, all drawings EP CN KR | 2019/0329342 3560647 110394510 10-2019-0124158 | A1 A2 A A | |
| JP | 2019-962 | A | 10 January 2019 | US entire text, all drawings EP CN KR | 2018/0361490 3417971 109128411 10-2018-0138158 | A1 A1 A A | |
| JP | 2010-240761 | A | 28 October 2010 | (Family: none) | | | |

Form PCT/ISA/210 (patent family annex) (January 2015)

**EP 4 470 701 A1**

**Patent documents cited in the description**

- JP 2017127918 A